# EUROPÄISCHE PATENTSCHRIFT

(11) **EP 2 753 765 B1**
(45) Veröffentlichungstag und Bekanntmachung des Hinweises auf die Patenterteilung: **18.11.2015**
(21) Anmeldenummer: 13702453.5
(22) Anmeldetag: 01.02.2013
(51) Int. Cl.: E02D 27/12, E02D 29/09, E02D 27/52, E02D 27/42

(54) **GERÄUSCHARM ZU INSTALLIERENDE GRÜNDUNGSKONSTRUKTION EINER OFFSHORE-ANLAGE, INSBESONDERE EINER OFFSHORE-WINDENERGIEANLAGE UND MONTAGEVERFAHREN HIERFÜR**
FOUNDATION STRUCTURE OF AN OFFSHORE PLANT, IN PARTICULAR AN OFFSHORE WIND TURBINE, WHICH FOUNDATION STRUCTURE IS TO BE INSTALLED AT A LOW NOISE LEVEL, AND INSTALLATION METHOD THEREFOR
CONSTRUCTION DE FONDATION, DESTINÉE À ÊTRE INSTALLÉE DE FAÇON SILENCIEUSE, D'UNE INSTALLATION EN MER, EN PARTICULIER D'UNE ÉOLIENNE EN MER ET PROCÉDÉ DE MONTAGE ASSOCIÉ

(30) Priorität: 03.02.2012 DE 102012100901
(43) Veröffentlichungstag der Anmeldung: 16.07.2014
(73) Patentinhaber: Vallourec Deutschland GmbH, 40472 Düsseldorf (DE)
(72) Erfinder: DENKER, Andreas, 88690 Uhldingen-Mühlhofen (DE); GENGE, Nico, 45219 Essen (DE); JOSAT, Ole, 51375 Leverkusen (DE); BRUNS, Claas, 40468 Düsseldorf (DE); HOJDA, Ralf, 58762 Altena (DE)
(74) Vertreter: Moser Götze & Partner Patentanwälte mbB
(86) Internationale Anmeldenummer: PCT/EP2013/052031
(87) Internationale Veröffentlichungsnummer: WO 2013/113873

(56) Entgegenhaltungen:
- EP-A1- 1 673 536
- WO-A2-2011/150335
- DE-U1-202011 101 599

## Beschreibung

Die vorliegende Erfindung betrifft eine Gründungskonstruktion einer Offshore-Anlage, insbesondere einer Offshore-Windenergieanlage, mit mindestens einem unter Ausschluss einer Schwerkraftgründung und unter Ausschluss einer schwimmenden Gründung am Meeresboden verankerbaren Gründungselement und einer daran befestigten Tragstruktur zur Fixierung der Offshore-Anlage. Auch betrifft die Erfindung ein Verfahren zur Montage dieser Gründungskonstruktion auf einem Meeresboden.

Im Zusammenhang mit der vorliegenden Erfindung werden unter dem Begriff Offshore-Anlagen Offshore-Plattformen und Offshore-Windenergieanlagen zusammengefasst. Offshore-Plattformen umfassen auch sogenannte Bohrinseln. Allgemein bekannte Gründungen für Offshore-Anlagen, insbesondere Offshore-Windenergieanlagen (OWEA), können in zwei Konstruktionsbereiche unterteilt werden. Der erste Konstruktionsbereich ist eine hochgradig ermüdungsbeanspruchte Tragstruktur, die am Meeresboden beginnt und ihr Ende an einer Flanschverbindung zum Turm der OWEA erreicht. Die Flanschverbindung trägt den Turm und eine Turbine der OWEA und leitet die dadurch hervorgerufenen Lasten und Einwirkungen ab. Der zweite Konstruktionsbereich ist ein Gründungselement, das die durch die Tragstruktur, den Turm und die Windturbine hervorgerufenen Lasten aufnimmt, diese in den Boden abträgt und sich unterhalb der Tragstruktur im Meeresboden befindet. Die gesamte OWEA besteht somit aus der Gründung mit dem Gründungselement und der Tragstruktur sowie dem Turm und der Turbine.

Zur Gründung einer OWEA im Meeresboden ist aus der DE 20 2010 010 094 U1 bekannt, so genannte Rammpfähle (Piles) als Gründungselemente einzusetzen, die je nach Konstruktion einen Durchmesser von circa 1,5 m bis circa 6 m aufweisen. Die Anzahl der eingesetzten Pfähle ist abhängig von der jeweiligen Tragstruktur. Nach heutigem Stand der Technik sind verschiedene Stahlkonstruktionen als Tragstrukturen bekannt, die beispielsweise mit Hilfe von Rammpfählen gegründet werden: Monopile, Jacket, Tripile und Tripod.

Eine aus der EP 2 067 913 A2 bekannte Jacket-Tragstruktur wird mit vier Rammpfählen am Meeresboden befestigt, während Tripiles und Tripods drei Rammpfähle mit größerem Durchmesser benötigen. Ein Monopile kommt mit einem Rammpfahl aus, der jedoch im Vergleich zu anderen Gründungen einen wesentlich größeren Durchmesser aufweist. Weiterhin ist aus der Schrift DE 20 2011 101 599 U1 eine hexagonale Tragkonstruktion bekannt, die mit sechs Pfählen gegründet wird.

Je nach Konstruktion und Bodenbeschaffenheit werden die Pfähle bis zu 65 Meter tief in den Meeresboden gerammt. Sie erreichen ein Gewicht von circa 220 bis 700 Tonnen, je nach Bodenbeschaffenheit und Auswahl der Tragstruktur. Die unteren Enden der Tragstruktur, die Tragstrukturfüße, können mit den Gründungspfählen in der Weise verbunden werden, dass die Füße der Tragstruktur in die gerammten Gründungspfähle, welche einen größeren Durchmesser besitzen, geschoben werden. Gründungspfahl und Tragstrukturfuß werden anschließend beispielsweise durch eine Spezialzementmischung miteinander verbunden (Grout-Verbindung).

Neben der Gründungsmöglichkeit mit Rammpfählen, sind auch Schwerkraftfundamente als Gründung für Offshore-Windenergieanlagen aus der DE 10 2010 012 094 B3 bekannt. Diese bestehen aus Stahlbeton und können bis zu circa 7000 Tonnen wiegen.

Des Weiteren ist aus der internationalen Patentanmeldung WO 2011/030167 A1 bereits eine Befestigung von Turbinen von Gezeitenkraftwerken unter dem Meeresspiegel mittels vertikal in den Meeresboden gebohrten Verpresspfählen bekannt. Die Verwendung von Verpresspfählen in Bezug auf Offshore-Windenergieanlagen ist in der amerikanischen Patentanmeldung US 2011/0061321 A1 beschrieben. Die Verpresspfähle kommen jedoch nach einer Art Hybridlösung zusammen mit einer Schwerkraftgründung zum Einsatz.

Ferner ist in dem britischen Patent GB 880 467 ein Einsatz von Rammpfählen zur Befestigung von gittermastartigen Gründungsstrukturen auf dem Meeresboden beschrieben. Die amerikanische Patentanmeldung US 2011/0293379 A1 offenbart mittels Verpresspfählen auf dem Meeresboden befestigte gittermastartige Ankerstrukturen, an denen nach Art einer schwimmenden Gründung Festmachleinen von schwimmenden Off-Shore-Anlagen befestigt werden.

Das Genehmigungsverfahren zur Errichtung von Offshore-Windparks beeinflusst in hohem Maße die Auswahl der Offshore einzusetzenden Techniken. Verantwortlich für das Genehmigungsverfahren in Deutschland ist das Bundesamt für Seeschifffahrt und Hydrografie (BSH). Bei Fragen und Konflikten zum Thema Naturschutz ist zusätzlich das Bundesamt für Naturschutz (BfN) in das Genehmigungsverfahren eingeschaltet.

Bezüglich der Tragstrukturen und Gründungselemente wird im Genehmigungsverfahren entschieden, ob die vom Betreiber vorgeschlagene Konstruktion aus Gründungselement und Tragstruktur zum Einsatz kommen darf. Bei der Entscheidungsfindung spielen umweltbeeinflussende Aspekte aber auch technische Anforderungen eine Rolle. Hinsichtlich der Ausführung von OWEA's wird insbesondere auf möglichst umweltfreundliche Lösungen, welche eine Versiegelung des Meeresbodens vermeiden beziehungsweise reduzieren, geachtet.

Derzeit stehen in Abhängigkeit von der Wassertiefe im Wesentlichen sechs verschiedene Gründungsstrukturen, Monopile, Schwerkraftfundament, Tripod, Tripile, Jacket und eine schwimmende Verankerung, in Konkurrenz zueinander. Mit Ausnahme der Schwerkraftfundamente werden meist alle Strukturen mit Rammpfählen gegründet. Die für den Rammprozess eingesetzten schweren Rammhämmer verursachen erhebliche Geräusch- und Erschütterungsemissionen. Diese Emissionen werden sowohl in der Luft, als auch im Wasser freigesetzt und stellen eine erhebliche Belastung für Natur und Umwelt dar.

Gefährdete Arten sind unter anderem Fischbestände, Seehunde und Kegelrobben, Wale, insbesondere Schweinswale, und die Bodenfauna (Benthos). Der Grenzwert für den Schalldruck liegt derzeit bei 160 dB in 750 m Entfernung von der Emissionsquelle. Jedoch wird dieser Wert in der Regel beim Rammen deutlich überschritten.

Wegen der Belastungen für die Meeresumwelt werden Windparkbetreiber und Installationsunternehmen verpflichtet, schalldämpfende Maßnahmen bei Rammarbeiten einzusetzen. Diese befinden sich derzeit allerdings noch in der Erprobungsphase. Verwendung finden unter anderem so genannte Blasenschleier. Jedoch ist bisher nicht geklärt, ob die Schalldämmung ausreicht, um den Grenzwert zu unterschreiten. Außerdem sind Blasenschleier anfällig bei Meeresströmungen, so dass deren schalldämmende Wirkung reduziert wird. Der Einsatz der Blasenschleier ist zudem zeit- und kostenintensiv und damit unwirtschaftlich.

Im Hinblick auf die Umweltverträglichkeit werden auch Schwerkraftfundamente kritisch bewertet. Schwerkraftfundamente werden aus Stahlbeton gefertigt und haben durch ihre Form und ihr Wirkprinzip im Vergleich zu anderen Lösungen einen sehr hohen Flächenverbrauch und versiegeln im Gründungsbereich den Meeresboden, der dann für die Bodenfauna und -flora nicht mehr nutzbar ist. Zusätzlich benötigen solche Gründungen eine aufwendige und zeitintensive Bodenerschließung. Daher werden in der Regel Gründungen mit Pfählen und keine Schwerkraftgründungen bei Offshore-Windenergieanlagen realisiert.

Für statische- und dynamische- Berechnungen der Lasteinwirkungen auf den Meeresboden sind zudem geologische Untersuchungen an jedem potentiellen Standort notwendig. Diese sind zeit- und kostenintensiv.

Ein weiterer wichtiger Punkt im Genehmigungsverfahren ist die Gewährleistung, dass die OWEAs nach ihrem Gebrauch wieder entfernt werden können. Die Gebrauchsdauer einer OWEA wird mit 20 bis 25 Jahre angegeben. Nach der Stilllegung ist der Rückbau vorzunehmen, bei dem die Rammpfähle oder Schwerkraftfundamente entfernt werden müssen.

Aufgabe der Erfindung ist es, eine geräuscharm zu installierende Gründungskonstruktion einer Offshore-Anlage, insbesondere einer Offshore-Windenergieanlage und Montageverfahren hierfür anzugeben, die eine hohe Umweltverträglichkeit bei der Installation aufweist und einfach und kostengünstig realisierbar ist.

Diese Aufgabe wird durch eine Gründungskonstruktion mit den Merkmalen des Anspruches 1 und ein Montageverfahren mit den Merkmalen des Anspruches 23 gelöst. Vorteilhafte Ausgestaltungen der Gründungskonstruktion sind in den Ansprüchen 1 bis 22 sowie 24 und 25 angegeben.

Die Lehre der Erfindung umfasst eine Gründungskonstruktion einer Offshore-Anlage, insbesondere einer Offshore-Windenergieanlage, mit mindestens einem unter Ausschluss einer Schwerkraftgründung und unter Ausschluss einer schwimmenden Gründung am Meeresboden verankerbaren Gründungselement und einer daran befestigten Tragstruktur zur Fixierung der Offshore-Anlage, die dadurch gekennzeichnet ist, dass das Gründungselement ein Pfahl ist, der mittels Bohren und/oder mittels Einvibrieren in den Meeresboden einbringbar ist, der mit einem organischen und/oder anorganischen Material im Meeresboden fixierbar ist und der in einem Winkel zu einer Vertikalen auf den Meeresboden ausgerichtet ist.

Mit der Verankerung durch Pfähle, die mittels Bohren und/oder mittels Einvibrieren in den Meeresboden einbringbar sind, beinhaltet die vorliegende Erfindung eine kostengünstige, zeitsparende und umweltschonende Gründungskonstruktion, mit der alle Umweltauflagen problemlos eingehalten werden können.

Das organische und/oder anorganische Material ist vorteilhaft aushärtbar, um eine schnelle und dauerhaft haltbare Fixierung des Pfahls im Meeresboden zu realisieren.

Im Zusammenhang mit der Erfindung wird unter dem Begriff "unter Ausschluss einer Schwerkraftgründung und unter Ausschluss einer schwimmenden Gründung" verstanden, dass die Gründungskonstruktion nach einer der folgenden Arten ausgebildet ist: Monopile, Tripod, Quadropod, Tripile und Jacket. Auch ist der Begriff "in einem Winkel zu einer Vertikalen auf den Meeresboden" in der Art zu verstehen, dass eine Normale zur Fläche des Meeresbodens gemeint, d.h. eine Gerade die rechtwinklig zum Meeresboden ausgerichtet ist. Demnach ist bei einem horizontalen Meeresboden die Vertikale auf den Meeresboden eine Vertikale im Raum und bei einem gegenüber einer Horizontalen geneigtem Meeresboden die Vertikale auf den Meeresboden eine Gerade unter einem Winkel zu einer im Raum Vertikalen. Bei einem gewölbten Meeresboden erfolgt der Bezug auf eine entsprechende Tangente.

Des Weiteren wird der Begriff des "Einvibrierens" im Sinne eines Aufbringens einer senkrecht nach unten gerichteten Schwingung auf den Pfahl verstanden, um im Gegensatz eines Rammens mit einer Aufbringung von Einzelschlägen auf einen Rammpfahl eine Abgrenzung zu schaffen. Das Einvibrieren wird auch als Einrütteln bezeichnet.

Gemäß der Lehre der Erfindung liegt der Hauptnutzen vor allem darin, dass bei Verwendung von Pfählen, die mittels Bohren und/oder mittels Einvibrieren in den Meeresboden einbringbar sind, auf das Rammen von Pfählen verzichtet werden kann. Diese erfindungsgemäßen Pfähle können geräuscharm und höchst umweltschonend mittels Bohren und/oder mittels Einvibrieren in den Baugrund eingebracht werden. Im Vergleich zu bekannten Lösungen ist die erfindungsgemäße Gründungskonstruktion einfacher und schneller zu realisieren und damit eine deutlich kostengünstigere Lösung. Schallintensive und zeitaufwändige Rammarbeiten werden unnötig.

Durch die Gründung mit den erfindungsgemäßen Pfählen wird der erlaubte Grenzwert von 160 dB deutlich unterschritten. Während heutige Rammverfahren bis zu etwa 230 dB erzeugen, werden bei der Installation einer OWEA gemäß der vorliegenden Erfindung beispielsweise beim Einbohren eines Pfahls in den Untergrund nur etwa 65 dB Schalllautstärke emittiert und beim Installationsprozess sind daher keine aufwendigen schalldämpfenden Lösungen, wie beispielsweise Blasenschleier, erforderlich. Offshore-Installationszeiten können verkürzt werden und somit auch die Abhängigkeit von stabilen Wetterverhältnissen.

Die erfindungsgemäßen Pfähle können sehr geräusch- und erschütterungsarm, sowie zeitsparend als Gründungspfahl in den Boden eingebracht werden. Hierbei wird der Gründungspfahl in den Boden hineingebohrt, wobei ein Ringraum zwischen Bohrloch und Pfahl entsteht, der durch ein gleichzeitig oder dem Bohrprozess nachfolgend eingebrachtes aushärtenden organischen und/oder anorganischen Material, wie beispielsweise ein Zementmörtel im Meeresboden fixierbar ist und auf ganzer Länge im Baugrund verfüllt wird. Die im Betriebszustand aufzunehmende Kraft wird durch den Verbund von Pfahl und Verpressgut entlang der gesamten Pfahllänge übertragen, wobei die Lastübertragung in den Untergrund mittels Mantelreibung erfolgt. Je nach abzutragender Last und Baugrundbeschaffenheit wird die Anzahl an erforderlichen Pfählen und die Neigung der Pfähle zur Vertikalen des Meeresgrundes ausgewählt. Die Pfähle sind zur Erhöhung der Lastabtragung in der Ebene des Meeresbodens geneigt zur Vertikalen festgelegt.

Vorzugsweise ist der Winkel des Pfahls zur Vertikalen 5-85°, insbesondere 10 bis 45°. Somit können die in den Meeresboden übertragbaren Lasten erhöht werden. Besonders vorteilhaft ist vorgesehen, dass der Pfahl mindestens einen Durchmesser von 60 mm aufweist.

In einer besonderen Ausgestaltung trägt der mindestens eine Pfahl in den Meeresboden in allen Raumrichtungen Lasten ab. Somit können die in den Meeresboden übertragbaren horizontalen Lasten weiter erhöht werden im Vergleich zu vertikal eingebrachten Pfählen.

Daher ist weiterhin vorteilhaft vorgesehen, dass das Gründungselement aus mehreren Pfählen besteht und ein Gründungssystem bildet.

Zur weiteren Erhöhung der in den Meeresboden übertragbaren Lasten, sind mindestens drei Pfähle in der Art im Meeresboden angeordnet, dass ihre Längserstreckungen in drei voneinander abweichende Richtungen weisen.

Gemäß einer weiteren Lehre der Erfindung ist der Pfahl vorzugsweise ein Ankerpfahl mit einem gerippten Stahlrohr als Tragglied, welches gleichermaßen als verlorene Bohrstange, als Injektionsrohr und als bleibendes Stahltragglied (Bewehrungsglied) dient. Als Material für den Pfahl kann ein Baustahl, wie z. B. S 355 J2H oder S 460NH, in Frage kommen.

Durch den Einsatz der Pfähle ist die erfindungsgemäße Konstruktion auf Zug, Druck, Biegung und Ermüdung beanspruchbar. Somit können sämtliche aero-servo-hydroelastische Einwirkungen aufgenommen und abgetragen werden.

Ein weiteres wesentliches Merkmal der erfindungsgemäßen Konstruktion ist die Möglichkeit, lösbare Verbindungen vorzusehen, die die Montage und Rückbaubarkeit der Konstruktion wesentlich vereinfachen.

Nach heutigem Stand der Technik müssen Offshore-Lösungen in Küstennähe an Land zusammengeschweißt und von dort aus verschifft werden. Bedingt durch die Größe derartiger Konstruktionen ist ein Transport auf dem Landweg nicht möglich, daher muss die Produktion in Hafennähe mit geeigneter Infrastruktur erfolgen. Das erfordert einen hohen kosten- und zeitintensiven logistischen Aufwand und beschränkt die Auswahl von Produktionsstätten auf wenige Standorte.

Die Erfindung gestattet es, dass die OWEA-Komponenten durch lösbare Verbindungen, wie Schraub- oder Bajonettverbindungen und dergleichen, leicht an- und abmontierbar sind. So können die Komponenten ortsunabhängig bis zu einer Größe, die noch transportabel ist, gebaut und anschließend zu einem Verladehafen gebracht und dort oder auf einem Montageschiff miteinander verbunden werden. Desweiteren ist durch die Lösbarkeit der Verbindungen die Forderung des Rückbaus wesentlich einfacher und kostengünstiger zu erfüllen.

Nach einer vorteilhaften Weiterbildung der Erfindung sind die Pfähle und die Tragstruktur über ein separates Kupplungselement - vorzugsweise lösbar - miteinander verbunden. Die Verbindung zwischen Kupplungselement und Tragstruktur und die Verbindung zwischen Kupplungselement und Pfahl kann stoff- und/oder kraft- und/oder formschlüssig ausgebildet sein. Hierzu weist das Kupplungselement entsprechende Anschlüsse zur Befestigung sowohl der Tragstruktur wie auch der Pfähle auf, wobei beispielsweise bei einem Monopile, der Anschluss zur Befestigung der Tragstruktur z.B. im Zentrum des entsprechenden Kupplungselements und die Anschlüsse zur Befestigung der Pfähle z.B. an den Ecken des Kupplungselementes angeordnet sein können.

Ein weiteres vorteilhaftes Merkmal der Erfindung sieht vor, dass das Kupplungselement als ein Gitterstrukturelement ausgebildet ist, welches vorzugsweise aus Rohren besteht. Die Rohre können als nahtlos warmgewalzte und/oder kalt umgeformten und/oder als geschweißte aus Warmband hergestellte Rohre und/oder Profile mit offenem Querschnitt ausgebildet sein und können je nach Anforderung eine gleiche oder unterschiedliche Querschnittsgeometrie wie einen runden oder eckigen, dreieckigen, rechteckigen, quadratischen oder polygonalen Querschnitt oder eine Kombination daraus aufweisen.

Da die Kupplungselemente die Last der Windenergieanlage über die Tragstruktur in die Pfahlgründung einleiten müssen und deshalb in höchstem Maße mechanisch beansprucht werden, wurden umfangreiche Untersuchungen durchgeführt, um optimale Gründungsstrukturen zu ermitteln.

Das Gitterstrukturelement ist danach vorteilhaft je nach Beanspruchung als dreidimensionale Struktur ausgebildet mit kubischer, tetraederstumpfförmiger , kegelförmiger oder pyramidenstumpfförmiger Gestalt und mit einer kreisförmigen, drei- beziehungsweise viereckigen oder polygonalen Grundfläche. Das Gitterstrukturelement weist dabei vorteilhaft eine Vierendeel-, Rahmen- oder Fachwerkstruktur auf, um die Lasten optimal abtragen zu können. Bei einer kreisförmigen Grundfläche sind die Pfähle vorzugsweise kreisförmig angeordnet. Wenn das Gitterstrukturelement eine eckige Grundfläche aufweist, sind in den Ecken Eckpfählen angeordnet, die sich auf dem Meeresboden abstützen und als Aufnahme für die Pfähle dienen.

Vorzugsweise ist das Gitterstrukturelement aus Stahl und/oder Zement oder Beton und/oder Verbundwerkstoffen hergestellt ist.

Die Herstellung der Gründung wird dadurch stark vereinfacht, dass das Kupplungselement schon vor der Montage der Tragstruktur auf dem Meeresboden aufgelegt und über die Anschlüsse mittels der Pfähle im Boden verankerbar ist.

Alternativ kann vorgesehen sein, dass das Kupplungselement oberhalb des Meeresbodens angeordnet ist, vorzugsweise in einem Abstand zwischen 1 und 5 m, und mittels des mindestens einen Pfahls im Meeresboden verankerbar ist.

Die Verbindung zwischen Pfahl und Kupplungselement kann sowohl innenseitig, außenseitig, beidseitig oder zentrisch am Gitterstrukturelement erfolgen. Nach einem weiteren vorteilhaften Merkmal der Erfindung dienen die auf dem Boden aufstehenden Eckpfähle des Gitterstrukturelements als Führungen für die Pfähle, so dass je nach Gestalt des Gitterstrukturelements die Pfähle in einem Winkel zur Vertikalen durch die Eckpfähle in den Boden eingebohrt bzw. einvibriert und im Boden beispielsweise mit Zementsuspension verpresst werden können. Dies hat den Vorteil, dass keine separaten Anschlüsse notwendig sind.

Hinsichtlich der Projektierung weist die Erfindung ebenfalls kosten- und zeitreduzierende Vorteile auf. Wie beschrieben, müssen derzeit aufwendige Bodenuntersuchungen durchgeführt werden. Durch die erfindungsgemäße Bohr- und/oder Einvibrier- und Verpresstechnik zur Verankerung der Kupplungselemente im Boden wird der Rammvorgang ersetzt. Das Bohren kann auf dem Meeresboden beispielsweise unter einer Saugglocke oder im Wasser durch Taucher, Maschinen oder Roboter durchgeführt werden. Durchaus vorstellbar ist auch das Bohren und/oder Einvibrieren oberhalb der Wasseroberfläche durch ein langes Führungsrohr.

Ein Vorteil dieser Technik entsteht durch die flexible Anpassungsmöglichkeit an die geologischen Randbedingungen. Durch die Auswahl von geeigneten Bohrköpfen können sowohl Sand, Schluff als auch festes Gestein durchbohrt werden. Mit diesen positiven Eigenschaften sind aufwendige und kostenintensive Meeresbodenuntersuchungen in viel geringerem Ausmaß nötig.

Gemäß der Lehre der Erfindung reduziert sich die Entnahme von Bodenproben wodurch sich ein weiterer ökologischer Vorteil ergibt. Weiterhin wird durch die Bauweise der Gründungskonstruktion die Bodenversiegelung eingeschränkt. Ein weiteres Alleinstellungsmerkmal ist, dass der geforderte Rückbau leicht möglich ist.

Besonders vorteilhaft ist der Pfahl ein gebohrter Verpresspfahl, insbesondere ein Bohr- Injektionspfahl.

Besonders vorteilhaft ist eine Verwendung der erfindungsgemäßen Gründungskonstruktion für eine Gründung einer Offshore-Windenergieanlage.

Das erfindungsgemäße Verfahren zur Montage dieser Gründungskonstruktion zeichnet sich dadurch aus, dass zunächst das Kupplungselement mittels in den Meeresboden eingebrachter Pfähle verankert wird und nachfolgend die Tragstruktur an das Kupplungselement angeschlossen wird.

Gemäß einer ersten Alternative wird das Kupplungselement auf den Meeresboden aufgesetzt und anschließend dort verankert.

Bei einer zweiten Alternative werden zunächst der oder die Pfähle so in den Meeresboden eingebracht werden, dass sie oberhalb des Meeresbodens enden und das Kupplungselement anschließend an die so eingebrachten Pfähle angeschlossen wird und nachfolgend die Tragstruktur an das Kupplungselement angeschlossen wird.

Die vorliegende Erfindung wird anhand von Ausführungsformen und weiteren Aspekten und in Verbindung mit den nachfolgenden Figuren weiter erläutert, ohne jedoch darauf beschränkt zu sein. Die Ausführungsformen samt ihrer Varianten sowie die weiteren Aspekte der Erfindung können beliebig miteinander kombiniert werden, sofern sich aus dem Zusammenhang nicht eindeutig das Gegenteil ergibt. Es zeigen:
Figur 1 eine schematische Darstellung einer erfindungsgemäßen Gründungskonstruktion mit Kupplungselement und Anschluss an ein Tripod in der Seitenansicht,
Figur 2 eine Darstellung wie Figur 1 jedoch mit Anschluss an ein Jacket,
Figur 3 eine Darstellung wie Figur 1 jedoch mit Anschluss an ein Tripile,
Figur 4 eine Darstellung wie Figur 1 jedoch mit Anschluss an ein Monopile,
Figur 5 Beispiele von erfindungsgemäßen Kupplungselementen in einer schematischen Darstellung der Draufsicht,
Figuren 6 bis 14 erfindungsgemäße Kupplungselemente als Gitterstrukturelemente in 3 D-Ansicht.

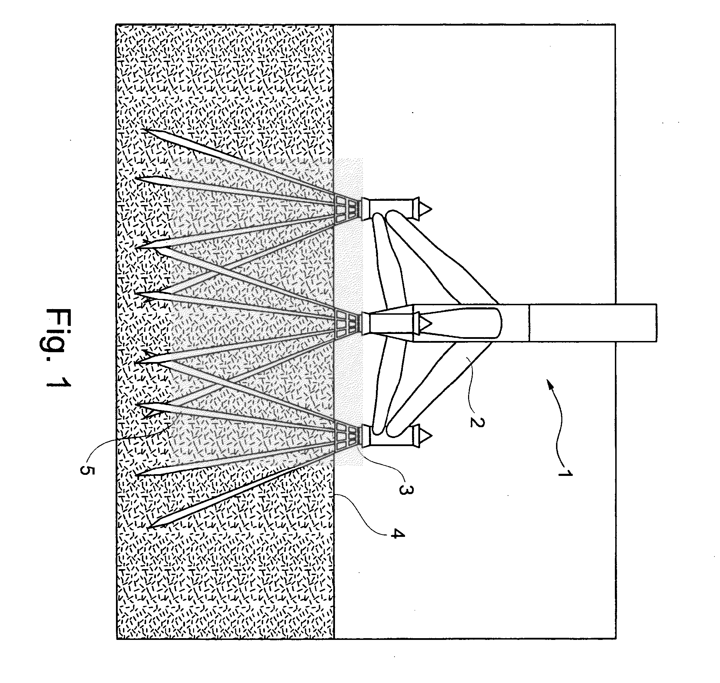

Die Figur 1 zeigt eine erfindungsgemäße Gründungskonstruktion 1 mit einem Kupplungselement 3 und Anschluss an ein Tripod für eine Offshore-Anlage, die als Offshore-Windenergieanlage ausgebildet ist, in der Seitenansicht. Zu sehen ist die Gründungskonstruktion 1, bestehend aus einer als Tripod ausgebildeten Tragstruktur 2, Kupplungselementen 3 und Pfählen 5 als Gründungselemente im Meeresboden 4. Die Tragstruktur 2 ist über drei Kupplungselemente 3 auf dem Meeresboden 4 mit Pfählen 5 verankert. Die Pfähle 5 sind vorzugsweise als Verpresspfähle ausgebildet, die mittels Bohren und/oder mittels Einvibrieren in den Meeresboden einbringbar sind. Anschließend werden die Pfähle 5 dann mit einem vorzugsweise aushärtenden organischen und/oder anorganischen Material im Meeresboden 4 fixiert. Hierbei sind die Pfähle 5 mit ihrer Längserstreckung in einem Winkel zu einer Vertikalen auf den Meeresboden ausgerichtet. Im vorliegenden Fall verläuft der Meeresboden 4 horizontal, so dass die Vertikale auf den Meeresboden 4 mit einer Vertikalen im Raum zusammen fällt. Sollte der Meeresboden 4 geneigt sein, schließt eine Vertikale auf den Meeresboden 4 im Sinne einer Normalen zu dem Meeresboden zu einer Vertikalen im Raum einen Winkel ein. Der Winkel des Pfahls 5 zur Vertikalen auf den Meeresboden 4 beträgt 5-85°, vorzugsweise 10 bis 45°. Außerdem weist der Pfahl 5 mindestens einen Durchmesser von 60 mm auf.

Auch kann der mindestens eine Pfahl 5 in den Meeresboden 4 Lasten in allen Raumrichtungen abtragen, da seine Längserstreckung in einem Winkel zur Vertikalen auf den Meeresboden 4 ausgerichtet ist. Der Winkel beträgt 5-85° und schließt somit die Normale zum Meeresboden aus. Vorzugsweise sind mindestens drei Pfähle 5 je Kupplungselement 3, im gezeigten Ausführungsbeispiel vier Pfähle 5, in der Art in dem Meeresboden 4 angeordnet, dass die Pfähle 5 mit ihren Längserstreckungen in voneinander abweichende Richtungen weisen.

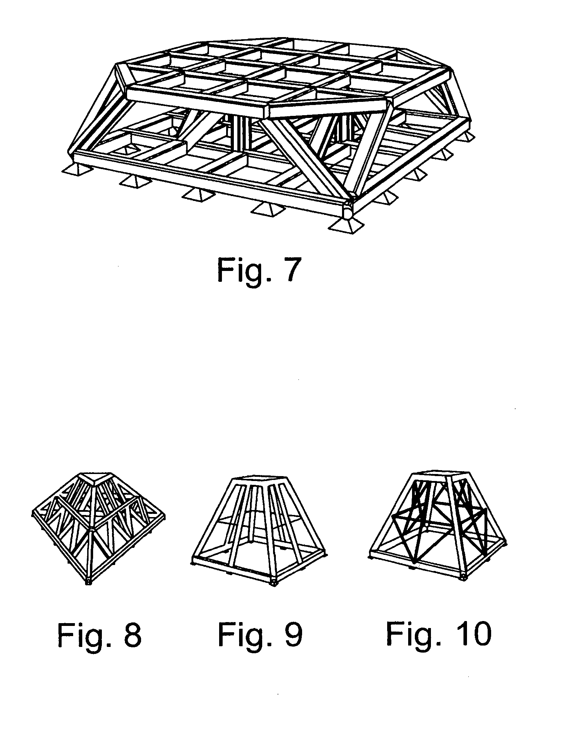

Die Kupplungselemente 3 bilden somit eine Art Adapter zum Verbinden der Pfähle 5 mit der Tragstruktur 2. Des Weiteren sind die Kupplungselemente 3 als Gitterstrukturelemente, im vorliegenden Beispiel pyramidenstumpfförmig als Vierendeelstruktur, ausgebildet (siehe auch Figur 9), wobei das Gitterstrukturelement aus Rohren mit rundem Querschnitt besteht. Die an den vier Ecken des Pyramidenstumpfes angeordneten Eckpfähle 6 dienen in diesem Beispiel vorteilhaft als Führungsrohre für die Pfähle 5 zur Verankerung der drei Kupplungselemente 3 im Meeresboden 4, so dass separate am Kupplungselement 3 angeordnete Führungen für die Pfähle 5 überflüssig sind.

Bei der Installation der Gründungskonstruktion 1 werden zunächst die Kupplungselemente 3 auf den Meeresboden 4 aufgesetzt. Anschließend werden die vorzugsweise als Bohr-Injektionsanker ausgebildeten Pfähle 5 in diesem Beispiel durch die Eckpfähle 6 an den vier Ecken des Pyramidenstumpfes geschoben und im Meeresboden 4 durch Bohren und Verpressen verankert. Die Verbindung zwischen den Pfählen 5 und den Kupplungselementen 3 ist lösbar über eine Schraubverbindung hergestellt (hier nicht dargestellt).

Alternativ kann vorgesehen sein, dass das Kupplungselement 3 oberhalb des Meeresbodens 4 angeordnet wird, vorzugsweise in einem Abstand zwischen 1 und 5 m, und mittels des mindestens einen Pfahls 5 im Meeresboden 4 verankerbar wird.

Im Gegensatz zum Stand der Technik, wird also die Tragstruktur 2 nicht mehr direkt auf dem Meeresboden 4 verankert sondern indirekt über Kupplungselemente 3. Nach der Installation beziehungsweise Verankerung der Kupplungselemente 3 im Meeresboden 4 wird die Tragstruktur 2 auf das Kupplungselement 3 aufgesetzt und mit geeigneten Mitteln form-, kraft- und/oder stoffschlüssig angeschlossen.

Je nach Ausgestaltung der Tragstruktur 2 und der Kupplungselemente 3 sind die Pfähle 5 und die Tragstruktur 2 im Zentrum des entsprechenden Kupplungselements 3 und/oder an dessen Außenseiten, Innenseiten, mittig oder an den Ecken angeordnet.

In einer bevorzugten Ausgestaltung ist der Pfahl 5 ein Bohr-Injektionspfahl, insbesondere ein Ankerpfahl mit einem gerippten Stahlrohr als Tragglied, welches gleichermaßen als verlorene Bohrstange, als Injektionsrohr und als bleibendes Stahltragglied (Bewehrungsglied) dient. Als Material für den Bohr-Injektionsanker kann ein Baustahl, wie z. B. S 355 J2H oder S 460NH, in Frage kommen.

Das erfindungsgemäße Verfahren zur Montage der Gründungskonstruktion 1 auf dem Meeresboden 4 umfasst im Wesentlichen die folgenden Verfahrensschritte:
- Positionieren der erfindungsgemäßen Gründungskonstruktion 1 auf der Oberfläche des Meeresbodens 4, wobei diese mindestens ein Kupplungselement 3 zur Aufnahme von oberhalb liegenden Komponenten, wie Tragstruktur 2, Turm und Turbine einer OWEA umfasst;
- Einbohren beziehungsweise Einvibrieren mindestens eines Pfahls 5 in den Meeresboden 4 zur Verankerung des Kupplungselementes 3;
- Injizieren von Zementmilch, Beton, Mörtel oder anderen Baustoffen durch den Injektionsanker in den ihn umgebenden Meeresboden 4 unter Ausbildung eines verfestigten Bereichs; und
- Verbinden des Injektionsankers mit dem Kupplungselement 3.

Möglich ist es ebenfalls, dass zunächst der oder die Pfähle 5 so in den Meeresboden 4 eingebracht werden, dass sie oberhalb des Meeresbodens 4 enden und das Kupplungselement 3 anschließend an die so eingebrachten Pfähle 5 angeschlossen wird und nachfolgend die Tragstruktur 2 an das Kupplungselement 3 angeschlossen wird.

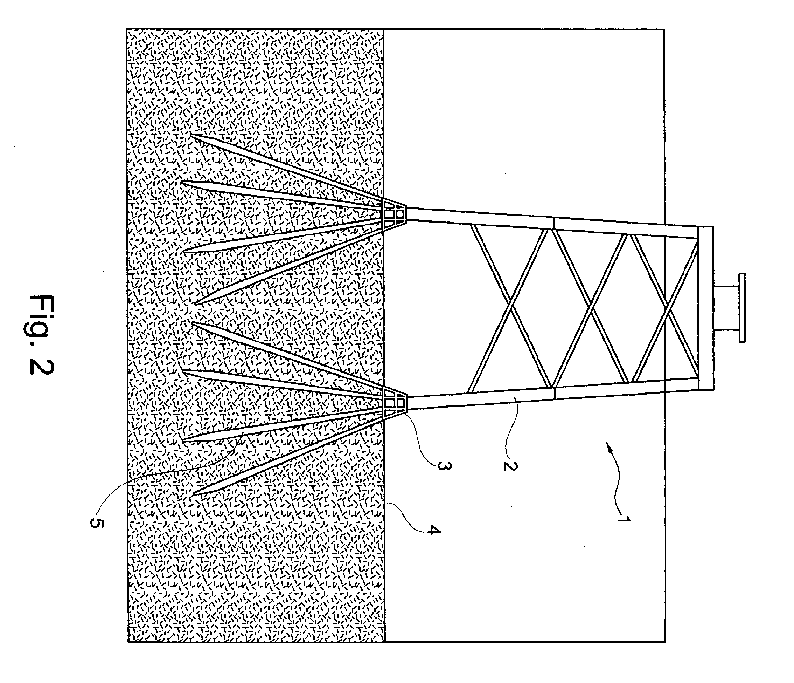

Die Figur 2 zeigt eine erfindungsgemäße Gründungskonstruktion 1 mit Anschluss an ein Jacket als Tragkonstruktion 2 in der Seitenansicht. Der Aufbau der Gründungskonstruktion 1 und die Gründung mittels der Pfähle 5 ist mit der in Figur 1 vergleichbar, so dass auf eine detaillierte Beschreibung verzichtet werden kann. Im Gegensatz zur Gründung eines Tripods werden im vorliegenden Fall die Stützen des Jackets nicht auf die Kupplungselemente 3 aufgesetzt, sondern diese sind zentral im Kupplungselement 3 angeordnet und mit diesem verbunden und stehen direkt auf dem Meeresboden 4.

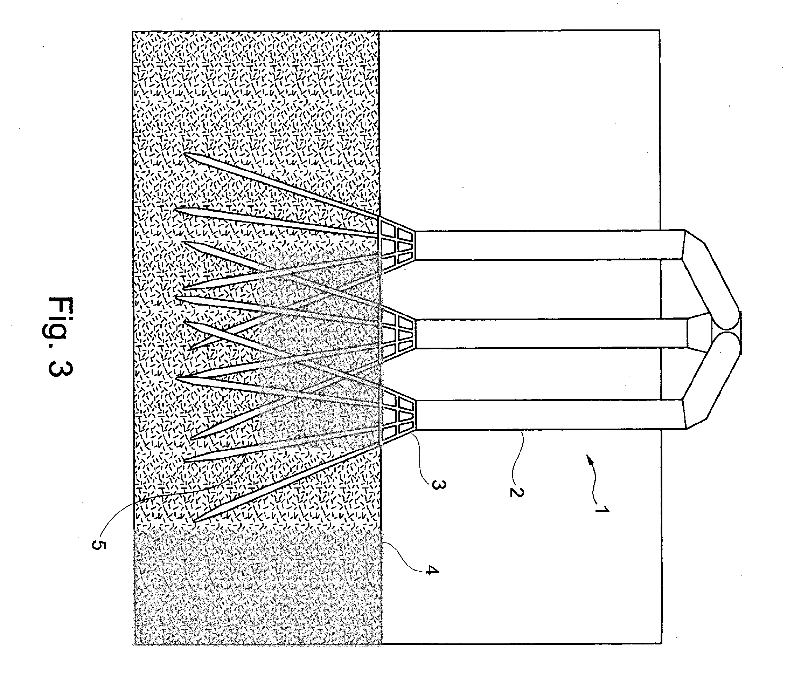

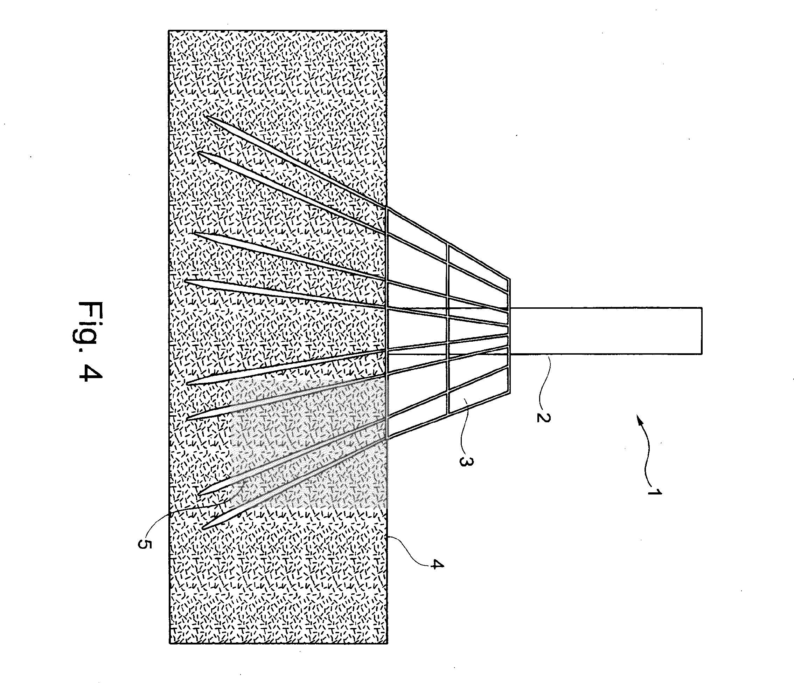

Figur 3 zeigt ein weiteres Anwendungsbeispiel für eine als Tripile und Figur 4 für eine als Monopile ausgebildete Tragstruktur 2.

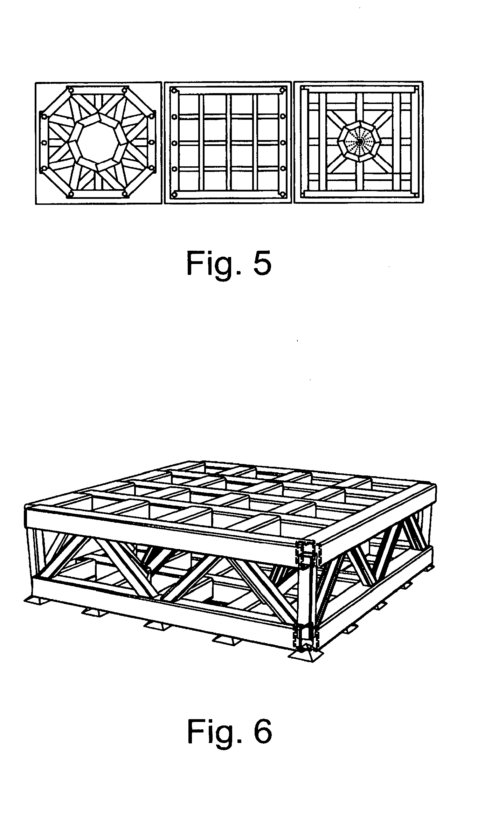

In Figur 5 sind Beispiele von Grundformen von erfindungsgemäßen Kupplungselementen 3 schematisch in der Draufsicht dargestellt, die je nach den gestellten Anforderungen anwendbar sind. Die aufgeführten Beispiele stellen keine abschließende Auflistung dar und sind bezüglich möglicher weiterer Formen nicht eingeschränkt. Die Kupplungselemente 3 sind als Gitterstrukturelemente mit einer Gitterstruktur ausgebildet, die als Flachgründungen, Fachwerke, Vierendeelsysteme ausgebildet sind und dreieckige (hier nicht dargestellt), kreisförmige, quadratische oder mehreckige Grundflächen aufweisen. Bei einer kreisförmigen Grundfläche sind die Pfähle 5 vorzugsweise kreisförmig angeordnet.

Die Figuren 6 bis 14 zeigen weitere Ausführungsformen erfindungsgemäßer Kupplungselemente 3 als Gitterstrukturelement in einer 3D-Ansicht.

Figuren 6 und 7 zeigen eine dreidimensionale Gitterstruktur in kubischer Gestalt für eine Flachgründung.

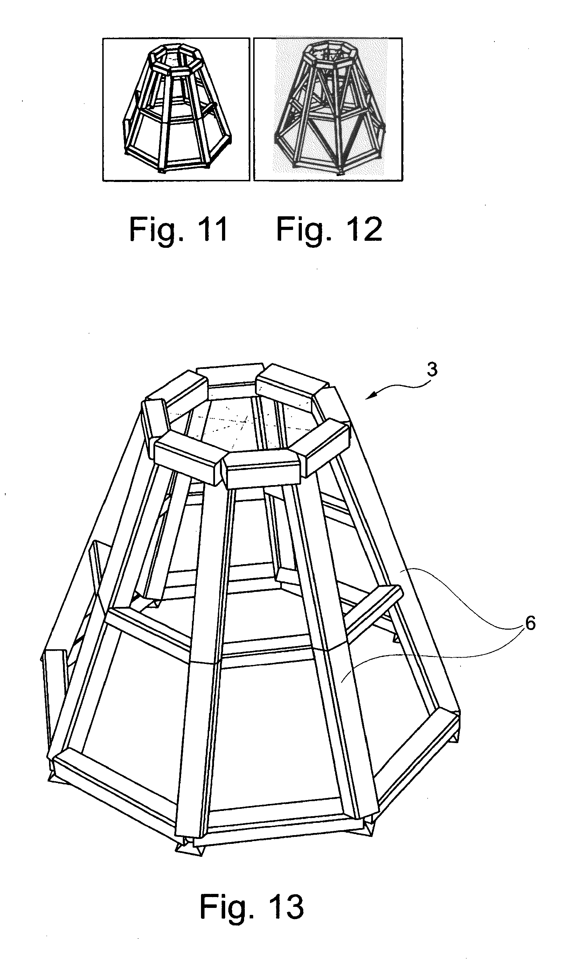

Die Figuren 8 bis 12 zeigen Beispiele für tetraederförmige (Figur 8) und pyramidenstumpfförmige (Figuren 9 und 10) Ausführungsformen der Gitterstrukturelemente mit Fachwerk (Figuren 8, 10, 12) oder Vierendeelsystem (Figuren 9 und 11). Kegelförmige Gestalten sind auch denkbar.

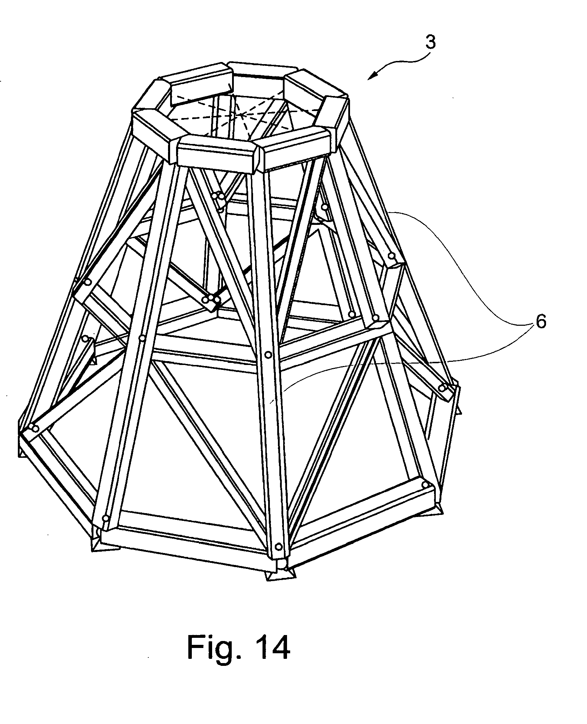

In den Figuren 13 und 14 sind als weitere Beispiele von der Grundfläche her achteckförmige Gitterstrukturelemente als Kupplungselemente 3 dargestellt. Das Gitterstrukturelement nach Figur 13 weist eine Vierendeelstruktur und das Element nach Figur 14 eine Fachwerkstruktur auf. Die Kupplungselemente 3 beider Gitterstrukturelemente weisen am oberen Ende eine zentrale Öffnung zur Aufnahme zum Beispiel eines Monopiles als Tragstruktur 2 auf, der durch die Öffnung des Kupplungselements 3 durchgesteckt und anschließend damit verbunden wird. Die Aufnahmen für die Verankerung des Kupplungselementes 3 im Meeresboden 4 werden in diesen Beispielen vorteilhaft durch die schräg stehenden Eckpfähle 6 gebildet, die als quadratische, so genannte Hohlprofile ausgestaltet sind. Durch diese Eckpfähle 6 wird der Bohr-Injektionsanker geschoben (hier nicht dargestellt) und nach der Verankerung im Meeresboden 4 mit dem Kupplungselement 3 vorteilhaft in lösbarer Form, beispielsweise durch Schrauben, miteinander verbunden.

Zusammenfassend sind folgende Vorteile der erfindungsgemäßen Gründungskonstruktion 1 zu nennen:
a) gegenüber dem heutigen Stand der Technik deutlich geringere Schallemissionen während des Installationsprozesses,
b) deutlich höhere Standfestigkeit durch geringere Auskolkungstiefen,
c) Schutz von Bodenfauna und -flora durch sehr reduzierte Bodenversiegelung,
d) Kosten- und Zeitersparnis durch:
   - Materialersparnis durch einwirkungsoptimierte Struktur der Gründungskonstruktion,
   - weniger aufwendige Baugrunduntersuchungen,
   - Einsatz von kleineren Installationsschiffen,
   - einfachere Positionierung des Gründungskörpers bedingt durch sein geringeres Gewicht,
   - größeres Installationszeitfenster durch optimierten Prozess und die gewählten erfindungsgemäßen Kupplungselemente,
e) optimierte und aufeinander abgestimmte Kombination von Kupplungselement und Pfahl.
f) Die Gründungskonstruktion lässt sich ohne großen Aufwand für die meisten heute verwendeten Tragkonstruktionen anpassen.

Das Gitterstrukturelement ist aus Stahl und/oder Zement oder Beton und/oder Verbundwerkstoffen hergestellt. Vorzugsweise sind die Gitterstrukturelemente Rohre, insbesondere nahtlos warmgewalzten und/oder kalt umgeformten und/oder geschweißt aus Warmband hergestellten Rohre, und/oder Profilen mit offenem Querschnitt. Die Rohre weisen gleiche oder unterschiedliche Querschnittsgeometrien wie einen runden oder eckigen, dreieckigen, rechteckigen, quadratischen oder polygonalen Querschnitt oder eine Kombination daraus auf.

Das vorliegende Ausführungsbeispiel bezieht sich auf Offshore-Windenergieanlagen. Die erfindungsgemäße Gründungskonstruktion 1 kann auch allgemein für Offshore-Plattformen, wie beispielsweise sogenannte Bohrinseln, eingesetzt werden.

### Bezugszeichenliste

- 1: Gründungskonstruktion
- 2: Tragstruktur
- 3: Kupplungselement
- 4: Meeresboden
- 5: Pfahl
- 6: Eckpfahl

## Patentansprüche

1. Gründungskonstrüktion (1) einer Offshore-Anlage, insbesondere einer Offshore-Windenergieanlage, mit mindestens einem unter Ausschluss einer Schwerkraftgründung und unter Ausschluss einer schwimmenden Gründung am Meeresboden verankerbaren Gründungselement und einer daran befestigten Tragstruktur (2) zur Fixierung der Offshore-Anlage, **dadurch gekennzeichnet, dass** das Gründungselement ein Pfahl (5) ist, der mittels Bohren und/oder mittels Einvibrieren in den Meeresboden einbringbar ist, der mit einem organischen und/oder anorganischen Material im Meeresboden fixierbar ist und der in einem Winkel zu einer Vertikalen auf den Meeresboden ausgerichtet ist.

2. Gründungskonstruktion (1) nach Anspruch 1, **dadurch gekennzeichnet, dass** der Winkel des Pfahls (5) zur Vertikalen 5-85°, insbesondere 10 bis 45°, beträgt.

3. Gründungskonstruktion nach Anspruch 1 oder 2, **dadurch gekennzeichnet, dass** der Pfahl (5) mindestens einen Durchmesser von 60 mm aufweist.

4. Gründungskonstruktion (1) nach einem der Ansprüche 1 bis 3, **dadurch gekennzeichnet, dass** der mindestens eine Pfahl (5) in den Meeresboden in allen Raumrichtungen Lasten abträgt.

5. Gründungskonstruktion (1) nach einem der Ansprüche 1 bis 4, **dadurch gekennzeichnet, dass** das Gründungselement aus mehreren Pfählen (5) besteht.

6. Gründungskonstruktion (1) nach Anspruch 5, **dadurch gekennzeichnet, dass** zur Erhöhung der in den Meeresboden übertragbaren Lasten, mindestens drei Pfähle (5) in der Art im Meeresboden angeordnet sind, dass ihre Längserstreckungen in drei voneinander abweichende Richtungen weisen.

7. Gründungskonstruktion (1) nach einem der Ansprüche 1 bis 6, **dadurch gekennzeichnet, dass** der mindestens eine Pfahl (5) und die Tragstruktur (2) über ein kraftübertragendes Kupplungselement (3) miteinander verbunden sind.

8. Gründungskonstruktion (1) nach einem der Ansprüche 1 bis 6, **dadurch gekennzeichnet, dass** der mindestens eine Pfahl (5) und die Tragstruktur (2) über ein Kupplungselement (3) lösbar miteinander verbunden sind.

9. Gründungskonstruktion (1) nach Anspruch 7 oder 8, **dadurch gekennzeichnet, dass** die Verbindung zwischen Kupplungselement (3) und Tragstruktur (2) und die Verbindung zwischen Kupplungselement (3) und dem mindestens einem Pfahl (5) stoff- und/oder kraft- und/oder formschlüssig ausgebildet ist.

10. Gründungskonstruktion (1) nach einem der Ansprüche 7 bis 9, **dadurch gekennzeichnet, dass** das Kupplungselement (3) als ein Gitterstrukturelement ausgebildet ist.

11. Gründungskonstruktion (1) nach Anspruch 10, **dadurch gekennzeichnet, dass** das Gitterstrukturelement aus Rohren, insbesondere nahtlos warmgewalzten und/oder kalt umgeformten und/oder geschweißt aus Warmband hergestellten Rohren, und/oder Profilen mit offenem Querschnitt besteht.

12. Gründungsstruktur (1) nach Anspruch 11, **dadurch gekennzeichnet, dass** die Rohre eine gleiche oder unterschiedliche Querschnittsgeometrie wie einen runden oder eckigen, dreieckigen, rechteckigen, quadratischen oder polygonalen Querschnitt oder eine Kombination daraus aufweisen.

13. Gründungskonstruktion (1) nach einem der Ansprüche 10 bis 12, **dadurch gekennzeichnet, dass** das Gitterstrukturelement eine eckige Grundfläche mit in den Ecken angeordneten Eckpfählen (6) aufweisen, die sich auf dem Meeresboden abstützen und als Aufnahme für die Pfähle (5) dienen.

14. Gründungsstruktur (1) nach einem der Ansprüche 10 bis 13, **dadurch gekennzeichnet, dass** das Gitterstrukturelement eine kreisförmige, dreieckige, viereckige oder polygonale Grundfläche aufweist.

15. Gründungskonstruktion (1) nach Anspruch 14, **dadurch gekennzeichnet, dass** bei einer kreisförmigen Grundfläche die Pfähle vorzugsweise kreisförmig angeordnet sind.

16. Gründungsstruktur (1) nach Anspruch 10, **dadurch gekennzeichnet, dass** das Gitterstrukturelement aus Stahl und/oder Zement oder Beton und/oder Verbundwerkstoffen hergestellt ist.

17. Gründungskonstruktion (1) nach den Ansprüchen 10 bis 16 **dadurch gekennzeichnet, dass** das Gitterstrukturelement eine kubische, tetraederstumpfförmige, kegelförmige oder pyramidenstumpfförmige Gestalt aufweist.

18. Gründungskonstruktion (1) nach den Ansprüchen 10 bis 17, **dadurch gekennzeichnet, dass** das Gitterstrukturelement eine Vierendeel-, Rahmen- oder Fachwerkstruktur aufweist.

19. Gründungskonstruktion (1) nach einem der Ansprüche 7 bis 18, **dadurch gekennzeichnet, dass** das Kupplungselement (3) auf dem Meeresboden (4) aufliegt und mittels des mindestens einen Pfahls (5) im Meeresboden verankerbar ist.

20. Gründungskonstruktion (1) nach einem der Ansprüche 7 bis 18, **dadurch gekennzeichnet, dass** das Kupplungselement (3) oberhalb des Meeresbodens (4) angeordnet ist, vorzugsweise in einem Abstand zwischen 1 und 5 m, und mittels des mindestens einen Pfahls (5) im Meeresboden verankerbar ist.

21. Gründungskonstruktion (1) nach einem der Ansprüche 1 bis 20, **dadurch gekennzeichnet, dass** der Pfahl (5) ein gebohrter Verpresspfahl ist.

22. Verwendung einer Gründungskonstruktion (1) gemäß einem oder mehrerer der Ansprüche 1 bis 21 für eine Offshore-Windenergieanlage.

23. Verfahren zur Montage einer Gründungskonstruktion (1) gemäß einem oder mehrerer der Ansprüche 7 bis 21 auf einem Meeresboden (4), **dadurch gekennzeichnet, dass** zunächst das Kupplungselement (3) mittels in den Meeresboden (4) eingebrachter Pfähle (5) verankert wird und nachfolgend die Tragstruktur (2) an das Kupplungselement (3) angeschlossen wird.

24. Verfahren nach Anspruch 23, **dadurch gekennzeichnet, dass** das Kupplungselement (3) auf den Meeresboden (4) aufgesetzt wird und anschließend verankert wird.

25. Verfahren nach Anspruch 23, **dadurch gekennzeichnet, dass** zunächst der oder die Pfähle (5) so in den Meeresboden eingebracht werden, dass sie oberhalb des Meeresbodens enden und das Kupplungselement (3) anschließend an die so eingebrachten Pfähle (5) angeschlossen wird und nachfolgend die Tragstruktur (2) an das Kupplungselement (3) angeschlossen wird.

## Claims

1. A foundation structure (1) of an offshore installation, in particular an offshore wind turbine, including at least one foundation element anchorable to the sea floor, excluding a gravity foundation and excluding a floating foundation, and a support structure (2) fastened thereto for fixing the offshore installation, **characterised in that** the foundation element is a pile (5), which is insertable into the sea floor by means of boring and/or by vibrating it in, which is fixable in the sea floor with an organic and/or inorganic material and which is aligned at an angle to the vertical on the sea floor.

2. A foundation structure (1) as claimed in Claim 1, **characterised in that** the angle of the pile (5) to the vertical is 5-85°, particularly 10 to 45°.

3. A foundation structure as claimed in Claim 1 or 2, **characterised in that** the pile (5) has a diameter of at least 60 mm.

4. A foundation structure (1) as claimed in one of Claims 1 to 3, **characterised in that** the at least one pile (5) transfers loads into the sea floor in all spatial directions.

5. A foundation structure (1) as claimed in one of Claims 1 to 4, **characterised in that** the foundation element consists of a plurality of piles (5).

6. A foundation structure (1) as claimed in Claim 5, **characterised in that**, in order to increase the loads transferable into the sea floor, at least three piles (5) are arranged in the sea floor in the manner that their longitudinal dimensions extend in three directions diverging from one another.

7. A foundation structure (1) as claimed in one of Claims 1 to 6, **characterised in that** the at least one pile (5) and the support structure (2) are connected together by means of a force-transmitting coupling element (3).

8. A foundation structure (1) as claimed in one of Claims 1 to 6, **characterised in that** the at least one pile (5) and the support structure (2) are releasably connected together by means of a coupling element (3).

9. A foundation structure (1) as claimed in Claim 7 or 8, **characterised in that** the connection between the coupling element (3) and support structure (2) and the connection between the coupling element (3) and the at least one pile (5) is of bonded and/or frictional and/or positive type.

10. A foundation structure (1) as claimed in one of Claims 7 to 9, **characterised in that** the coupling element (3) is constructed in the form of a grid structural element.

11. A foundation structure (1) as claimed in Claim 10, **characterised in that** the grid structural element consists of tubes, particularly seamlessly hot rolled tubes and/or cold worked tubes and/or tubes produced by welding hot strip and/or profiles with an open cross-section.

12. A foundation structure (1) as claimed in Claim 11, **characterised in that** the tubes have the same or different cross-sectional geometry such as a round, angular, triangular, rectangular, square or polygonal cross-section or a combination thereof.

13. A foundation structure (1) as claimed in one of Claims 10 to 12, **characterised in that** the grid structural element has an angular base surface with corner piles (6) arranged in the corners, which bear on the sea floor and act as receptacles for the piles (5).

14. A foundation structure (1) as claimed in one of Claims 10 to 13, **characterised in that** the grid structural element has a circular, triangular, rectangular or polygonal base surface.

15. A foundation structure (1) as claimed in Claim 14, **characterised in that** with a circular base surface the piles are preferably circularly arranged.

16. A foundation structure (1) as claimed in Claim 10, **characterised in that** the grid structural element is manufactured of steel and/or cement or concrete and/or composite materials.

17. A foundation structure (1) as claimed in Claims 10 to 16, **characterised in that** the grid structural element has a cubic, truncated triangular pyramidal, conical or truncated pyramidal shape.

18. A foundation structure (1) as claimed in Claims 10 to 17, **characterised in that** the grid structural element has a Vierendeel, frame or lattice structure.

19. A foundation structure (1) as claimed in one of Claims 7 to 18, **characterised in that** the coupling element (3) rests on the sea floor (4) and is anchorable in the sea floor by means of the at least one pile (5).

20. A foundation structure (1) as claimed in one of Claims 7 to 18, **characterised in that** the coupling element (3) is arranged above the sea floor (4), preferably at a spacing of between 1 and 5 m, and is anchorable in the sea floor by means of the at least one pile (5).

21. A foundation structure (1) as claimed in one of Claims 1 to 20, **characterised in that** the pile (5) is a bored injection pile.

22. Use of a foundation structure (1) as claimed in one or more of Claims 1 to 21 for an offshore wind turbine.

23. A method of installing a foundation structure (1) as claimed in one or more of Claims 7 to 21 on a sea floor (4), **characterised in that** firstly the coupling element (3) is anchored by means of piles (5) introduced into the sea floor (4) and the support structure (2) is then connected to the coupling element (3).

24. A method as claimed in Claim 21, **characterised in that** the coupling element (3) is placed on the sea floor (4) and then anchored.

25. A method as claimed in Claim 23, **characterised in that** firstly the pile or piles (5) are introduced into the sea floor so that they terminate above the sea floor and the coupling element (3) is then connected to the piles (5) thus introduced and then the support structure (2) is connected to the coupling element (3).

## Revendications

1. Structure de fondation (1) d'une installation offshore, notamment d'une éolienne offshore, comprenant au moins un élément de fondation pouvant être ancré au fond marin à l'exclusion d'une fondation à gravité et à l'exclusion d'une fondation flottante et une structure de support (2) fixée à l'élément de fondation et servant à fixer l'installation offshore, **caractérisée en ce que** l'élément de fondation est un pilotis (5) qui peut être introduit dans le fond marin par forage et/ou par enfoncement par vibrations, qui peut être fixé au fond marin avec une matière organique et/ou minérale et qui est orienté sur le fond marin angulairement par rapport à une verticale.

2. Structure de fondation (1) selon la revendication 1, **caractérisée en ce que** l'angle du pilotis (5) par rapport à la verticale est compris entre 5 à 85°, en particulier entre 10 et 45°.

3. Structure de fondation selon la revendication 1 ou la revendication 2, **caractérisée en ce que** le pilotis (5) a un diamètre d'au moins 60 mm.

4. Structure de fondation (1) selon l'une des revendications 1 à 3, **caractérisée en ce que** l'au moins un pilotis (5) supporte des charges dans le fond marin dans toutes les directions de l'espace.

5. Structure de fondation (1) selon l'une des revendications 1 à 4, **caractérisée en ce que** l'élément de fondation est constitué d'une pluralité de pilotis (5).

6. Structure de fondation (1) selon la revendication 5, **caractérisée en ce que**, pour augmenter les charges transmises dans le fond marin, au moins trois pilotis (5) sont disposés dans le fond marin de telle manière que leurs extensions longitudinales sont dirigées dans trois directions différentes.

7. Structure de fondation (1) selon l'une des revendications 1 à 6, **caractérisée en ce que** l'au moins un pilotis (5) et la structure de support (2) sont reliés entre eux par l'intermédiaire d'un élément d'accouplement à transmission de forces (3).

8. Structure de fondation (1) selon l'une des revendications 1 à 6, **caractérisée en ce que** l'au moins un pilotis (5) et la structure de support (2) sont reliés entre eux de façon amovible par l'intermédiaire d'un élément d'accouplement (3).

9. Structure de fondation (1) selon la revendication 7 ou 8, **caractérisée en ce que** la liaison entre l'élément d'accouplement (3) et la structure de support (2) et la liaison entre l'élément d'accouplement (3) et l'au moins un pilotis (5) sont des liaisons par complémentarité de formes et/ou par engagement de forces et/ou par engagement de matière.

10. Structure de fondation (1) selon l'une des revendications 7 à 9, **caractérisée en ce que** l'élément d'accouplement (3) est réalisé sous la forme d'un élément structurel en treillis.

11. Structure de fondation (1) selon la revendication 10, **caractérisée en ce que** l'élément structurel en treillis est constitué de tubes, en particulier de tubes laminés à chaud sans soudure et/ou mis en forme à froid et/ou réalisés par soudage à partir d'un feuillard à chaud.

12. Structure de fondation (1) selon la revendication 11, **caractérisée en ce que** les tubes ont la même géométrie ou des géométries différentes en coupe transversale telle qu'une section transversale ronde, carrée, rectangulaire, triangulaire, quadrangulaire ou polygonale ou une combinaison de celles-ci.

13. Structure de fondation (1) selon l'une des revendications 10 à 12, **caractérisée en ce que** l'élément structurel en treillis a une base carrée dont les coins sont pourvus de pilotis (6) qui sont supportés par le fond marin et qui servent de logement pour les pilotis (5).

14. Structure de fondation (1) selon l'une des revendications 10 à 13, **caractérisée en ce que** l'élément structurel en treillis a une base circulaire, triangulaire, carrée ou polygonale.

15. Structure de fondation (1) selon la revendication 14, **caractérisée en ce que**, dans le cas d'une base circulaire, les pilotis sont de préférence disposés suivant un cercle.

16. Structure de fondation (1) selon la revendication 10, **caractérisée en ce que** l'élément structurel en treillis est fabriqué en acier et/ou en ciment ou béton et/ou en des matériaux composites.

17. Structure de fondation (1) selon les revendications 10 à 16, **caractérisée en ce que** l'élément structurel en treillis a une forme de cube, de tétraèdre tronqué, de cône et de pyramide tronqué.

18. Structure de fondation (1) selon les revendications 10 à 17, **caractérisée en ce que** l'élément structurel en treillis a une structure de type charpente, portique ou Vierendeel.

19. Structure de fondation (1) selon l'une des revendications 7 à 18, **caractérisée en ce que** l'élément d'accouplement (3) est en appui sur le fond marin (4) et peut être ancré dans le fond marin au moyen d'au moins un pilotis (5).

20. Structure de fondation (1) selon l'une des revendications 7 à 18, **caractérisée en ce que** l'élément d'accouplement (3) est disposé au-dessus du fond marin (4), de préférence à une distance comprise entre 1 et 5 m, et peut être ancré dans le fond marin au moyen d'au moins un pilotis (5).

21. Structure de fondation (1) selon l'une des revendications 1 à 20, **caractérisée en ce que** le pilotis (5) est un pilotis de scellement réalisé par forage.

22. Utilisation d'une structure de fondation (1) selon l'une ou plusieurs des revendications 1 à 21 destinée à une éolienne offshore.

23. Procédé d'installation d'une structure de fondation (1) selon l'une ou plusieurs des revendications 7 à 21 sur un fond marin (4), **caractérisé en ce que** tout d'abord l'élément d'accouplement (3) est ancré au moyen de pilotis (5) enfoncés dans le fond marin (4) puis la structure de support (2) est reliée à l'élément d'accouplement (3).

24. Procédé selon la revendication 23, **caractérisé en ce que** l'élément d'accouplement (3) est placé puis ancré sur le fond marin (4).

25. Procédé selon la revendication 23, **caractérisé en ce que** tout d'abord le ou les pilotis (5) sont enfoncés dans le fond marin de façon à se terminer au-dessus du fond marin puis l'élément d'accouplement (3) est relié aux pilotis (5) ainsi enfoncés et la structure de support (2) est reliée par la suite à l'élément d'accouplement (3).
